# EUROPÄISCHE PATENTANMELDUNG

(11) **EP 1 557 797 A2**
(43) Veröffentlichungstag der Anmeldung: **27.07.2005**
(21) Anmeldenummer: 04029469.6
(22) Anmeldetag: 13.12.2004
(51) Int. Cl.: G07C 3/00

(54) **Anlageninformationssystem und Verfahren für dasselbe**

(30) Priorität: 20.01.2004 DE 102004003052
(71) Anmelder: SIEMENS AKTIENGESELLSCHAFT, 80333 München (DE)
(72) Erfinder: Bieber, Jürgen, 76275 Ettlingen (DE); Pechman, Klaus, 90537 Feucht (DE)

(57) **Zusammenfassung**

Die vorliegende Erfindung betrifft ein Anlageninformationssystem(1) mit Mitteln (2) zum Akquirieren einer Vielzahl von Prozessinformationsdaten (PI) von Automatisierungsgeräten (5), -systemen (5), Diagnosegeräten (5), -systemen (5) und/oder weiteren Geräten (5) einer Anlage, und- Mitteln (3,3b) zur Aufbereitung und/oder Darstellung der akquirierten Prozessinformationsdaten (PI). Das Anlageninformationssystem (1) ist gekennzeichnet durch Mittel (1b) zur Selektion spezieller Prozessinformationsdaten aus der Vielzahl der zu akquirierenden Prozessinformationsdaten (PI) nach zuvor festgelegten Kriterien.

Dadurch, und mit dem entsprechenden erfindungsgemäßen Verfahren können aus der Vielzahl der akquirierten Prozessinformationsdaten (PI) spezielle Prozessinformationsdaten, die für den Prozessablauf oder einen Anwender besonders relevant sind, selektiert, ggf. ausgewertet und dem Anwender zur Anzeige gebracht werden.

## Beschreibung

Die vorliegende Erfindung betrifft ein Anlageninformationssystem gemäß dem Oberbergriff des Anspruchs 1. Ferner betrifft die vorliegende Erfindung ein Verfahren für ein Anlageninformationssystem gemäß dem Oberbergriff des Anspruchs 8.

In modernen Produktionsanlagen, insbesondere in der Prozessindustrie, fallen während des Produktionsprozesses, bedingt durch den vermehrten Einsatz intelligenter Feldgeräte, immer mehr Daten an. Diese Daten werden teilweise direkt in Systemen zur Bedienung und Beobachtung (auch HMI- oder SCADA-Systeme) für die Überwachung und Steuerung des jeweiligen Produktionsprozesses genutzt. Desgleichen werden Daten über den Produktionsprozess, aber auch von so genannten Historian-Systemen bzw. Systemen zur Verwaltung der Anlageninformation (Plant Information Management System, PIMS) derart genutzt, dass die Daten in performanten Datenbanken archiviert werden und für eine spätere Analyse mit Hilfe statistischer Auswertsysteme zur Verfügung stehen.

Die heutzutage verwendeten Systeme zum Bedienen und Beobachten (B&B-Systeme) akquirieren also Prozessdaten, um die Augenblickswerte, beispielsweise in graphischer Form, anzuzeigen. Darüber hinaus erzeugen die B&B-Systeme aus den Daten auch Alarme und Ereignisse. Sie archivieren die Prozesswerte ebenfalls, soweit dies für eine spätere Anzeige notwendig ist. Diese Archivierung wird typischerweise in proprietärer Form in einem eigenen Dateisystem vorgenommen. Die graphische Repräsentation der Prozessdaten kann auf so genannten B&B-Clients vorgenommen werden. Hierbei werden in der Regel proprietäre Schnittstellen benutzt. Für B&B-Systeme ist es überaus wichtig, dass sie hochverfügbar zu jeder Zeit ein Bedienen der Anlage sicherstellen. Deshalb bieten sie hochentwickelte Redundanzmechanismen und lassen eine Verteilung der Funktionalität selbst über das Internet zu. Außerdem handelt es sich bei großen Systemen zum Bedienen und Beobachten oftmals um verteilte Systeme, um der Topologie der Anlage Rechnung zu tragen. Dadurch ist auch die Datenerfassung sowie das Ableiten von Meldungen und das Archivieren verteilt. Systeme zum Bedienen und Beobachten bieten jedoch für die Clients Mechanismen, die diese Verteilung transparent machen.

Die heute in der Industrie verwendeten Anlageninformationssysteme (Historian-Systeme, PIMS) dienen der sehr schnellen, zentralen Akquise von Prozessdaten. Diese Prozessinformationsdaten werden in der Regel in einer Datenbank bespeichert. Die Clients dieser Systeme, beispielsweise einfache Datenbank-Clients, können diese Daten dann später über Standard-Schnittstellen (ODBC, OLE DB, ADO, SQL o. ä.) abfragen und weiterverarbeiten.

Sowohl die Systeme zum Bedienen & Beobachten als auch die Historian-Systeme greifen dabei oft auf die gleichen Prozessinformationsdaten zurück. Die noch nicht vorveröffentlichte deutsche Anmeldung 10243065.9 der Anmelderin beschreibt ein System, bei dem die Funktionalitäten beider Einzelsysteme in einem einzigen System kombiniert werden. Durch diese Kombination der Bedien- & Beobachten- und der Historien-Funktionalität wird dann der, bei zwei getrennten Systemen üblicherweise erforderliche, doppelte Aufwand bei der Akquirierung und Aufbereitung der Prozessinformationsdaten vermieden. Die gleichen Prozessinformationsdaten müssen nicht von mehreren Systemen angefordert werden, sondern stehen nach einmaliger Akquirierung für alle weiteren Aufgaben, wie beispielsweise das Bedienen & Beobachten oder für Historien-Funktionalitäten, zentral in dem einen Anlageninformationssystem zur Verfügung. Aus dieser Vielzahl von akquirierten Prozessinformationsdaten wird es aber immer einige spezielle Prozessinformationsdaten geben, die für den Betrieb , das heißt den Prozessablauf oder auch für den Anwender der Anlage besonders relevant sind, und daher dem Anwender gesondert zur Verfügung gestellt werden sollten.

Aufgabe der vorliegenden Erfindung ist es nun, ein Anlageninformationssystem und ein entsprechendes Verfahren bereitzustellen, das eine erweiterte Funktionalität bei der Akquirierung und Aufbereitung der Prozessinformationsdaten aufweist.

Diese Aufgabe wird gelöst durch das Anlageninformationssystem mit den Merkmalen des Anspruchs 1, sowie dem Verfahren mit den Merkmalen des Anspruchs 8.

Das Anlageninformationssystem weist dazu Mittel zum Akquirieren einer Vielzahl von Prozessinformationsdaten von Automatisierungsgeräten, -systemen, Diagnosegeräten, -systemen und/oder weiteren Geräten einer Anlage, und Mittel zur Aufbereitung und/oder Darstellung der akquirierten Prozessinformationsdaten auf und ist gekennzeichnet durch Mittel zur Selektion spezieller Prozessinformationsdaten aus der Vielzahl der zu akquirierenden Prozessinformationsdaten nach zuvor festgelegten Kriterien.

Durch diese letzteren Mittel zur Selektion werden somit nach zuvor festgelegten Kriterien einzelne spezielle, also für den Betrieb der Anlage und insbesondere für den Prozessablauf oder auch für den Anwender wesentliche und damit relevante Prozessinformationsdaten aus der Vielzahl der in der Anlage zur Verfügung stehenden Prozessinformationsdaten selektiert. Werden diese selektierten speziellen Prozessinformationsdaten dann dem Anwender zur Anzeige gebracht, hat er die Möglichkeit, sich einen schnellen Überblick über die relevanten Prozessinformationsdaten zu verschaffen.

Entsprechendes kann mit dem erfindungsgemäßen Verfahren erreicht werden, wobei das Verfahren die folgenden Schritte aufweist:
- Selektieren von speziellen Prozessinformationsdaten aus einer Vielzahl von zu akquirierenden Prozessinformationsdaten von Automatisierungsgeräten, -systemen, Diagnosegeräten,
- systemen und/oder weiteren Geräten einer Anlage nach zuvor festgelegten Kriterien,
- Akquirieren der Prozessinformationsdaten, und
- Aufbereiten und/oder Darstellen zumindest der selektierten speziellen Prozessinformationsdaten.

Da die Selektion der zu akquirierenden speziellen Prozessinformationsdaten sowohl im erfindungsgemäßen Anlageninformationssystem als auch im erfindungsgemäßen Verfahren nach zuvor festgelegten Kriterien erfolgt, kann die Akquirierung dieser relevanten Prozessinformationsdaten selbständig, das heißt unabhängig vom Anwender, erfolgen. So werden insbesondere im Betrieb des Automatisierungssystems die, nach den einmal zuvor festgelegten Kriterien festgelegten, speziellen Prozessinformationsdaten von den entsprechenden Stellen in der Produktionsanlage abgefragt, das heißt akquiriert, gegebenenfalls gespeichert und aufbereitet, um sie anschließend dem Anwender zur Anzeige zu bringen.

Können die Kriterien anwenderspezifisch festgelegt werden, so hat der Anwender die Möglichkeit spezielle Prozessinformationsdaten, die für ihn wesentlich sind zu selektieren. So kann der Anwender vor dem eigentlichen Prozessablauf, das heißt beispielsweise zum Zeitpunkt der Projektierung (Engineering) oder vor Inbetriebnahme der Anlage, aber auch während des Prozess-Betriebs (Runtime) festlegen, welche speziellen Prozessinformationsdaten im laufenden Betrieb der Anlage akquiriert, gesammelt und ihm gegebenenfalls auch noch aufbereitet im Laufe des Prozessablaufs angezeigt werden sollen.

Die Kriterien für die Akquirierung spezieller Prozessinformationsdaten, die für einen reibungslosen Ablauf der Anlage wichtig sind, sollten dagegen schon während der Projektierung der Anlage prozessspezifisch festgelegt werden. So kann sichergestellt werden, dass diese speziellen für einen jeweiligen Prozess relevanten Prozessinformationen auch dem Anwender zur Anzeige gebracht werden können. In aller Regel wird die Selektion der zu akquirierenden speziellen Prozessinformationsdaten durch eine Kombination aus anwenderspezifisch und prozessspezifisch festgelegten Kriterien erfolgen.

Je nach Art der Anlage und des damit realisierten Produktionsprozesses kann es notwendig sein, dass die Akquirierung und gegebenenfalls die Aufbereitung einzelner spezieller Prozessinformationsdaten zyklisch wiederkehrend erfolgt, während die Akquirierung und Aufbereitung anderer spezieller Prozessinformationsdaten ereignisgesteuert erfolgt. So sollten insbesondere Prozessinformationsdaten, die auf eine Störung hinweisen, entsprechend ereignisgesteuert, das heißt unmittelbar nach Auftreten der Störung akquiriert werden, so dass sie dann auch unmittelbar dem Anwender angezeigt werden können. Andere relevante Prozessinformationsdaten, wie beispielsweise Prozesstemperatur, oder -druck, etc. können dagegen zyklisch wiederkehrend, das heißt in bestimmten zeitlichen Abständen, wiederkehrend akquiriert werden.

Um die akquirierten und die aufbereiteten selektierten speziellen Prozessinformationsdaten dem Anwender zur Anzeige zu bringen, sind diese in entsprechender Art und Weise an einen zuvor konfigurierten Empfänger weiterzuleiten. Im erfindungsgemäßen Anlageninformationssystem stehen dazu entsprechende Kommunikationsmittel bereit, die insbesondere die aufbereiteten selektierten speziellen Prozessinformationsdaten an die konfigurierten Empfänger weiterleiten. Ein Anwender kann somit unmittelbar über einen dieser konfigurierten Empfänger die aufbereiteten selektierten spezielle Prozessinformationsdaten abfragen. um einen Überblick über den aktuellen Prozesszustand der Anlage zu erhalten.

Die Weiterleitung der aufbereiteten selektierten speziellen Prozessinformationsdaten kann dabei zyklisch wiederkehrend oder ereignisgesteuert erfolgen. So können, insbesondere, wenn der Anwender über den Empfänger online mit der Anlage in Verbindung steht, die aktuellen Werte der selektierten Prozessinformationsdaten zyklisch wiederkehrend dem Anwender zur Anzeige gebracht werden. Der Anwender erhält somit einen kontinuierlichen Überblick über die speziellen Prozessinformationsdaten. Andererseits können die selektierten Prozessinformationsdaten dem Anwender auch ereignisgesteuert, zum Beispiel sobald er sich in die Anlage einloggt, zur Anzeige gebracht werden. Somit erhält der Anwender zu dem Zeitpunkt, an dem er sich beispielsweise zum Bedienen und Beobachten wieder in die Anlage einloggt, einen schnellen Überblick über die selektierten speziellen Prozessinformationsdaten.

Die speziellen Prozessinformationsdaten können direkt mit entsprechenden Mitteln zum Bedienen & Beobachten im Anlageninformationssystem angezeigt werden und/oder werden auf entsprechenden mit dem Anlageninformationssystem verbundenen Clients angezeigt. Vorzugsweise werden zumindest die speziellen Prozessinformationsdaten im Format einer SMS, einer Email oder eines Fax an einen der zuvor konfigurierten Empfänger weitergeleitet. So hat der Anwender, gerade bei zunehmend dezentral aufgebauten Anlagen, deren Geräte und Systeme räumlich weitverteilten und über ein drahtgebundenes oder drahtloses Netzwerk, wie beispielsweise das Intranet oder ein Web wie beispielsweise das Internet miteinander verbunden sind, die Möglichkeit, die selektierten speziellen und für ihn relevanten Prozessinformationsdaten auch an einem zuvor konfigurierten Empfänger zu erhalten. So besteht insbesondere die Möglichkeit, dass die speziellen Prozessinformationsdaten und deren Auswertungen unmittelbar an einen drahtlosen Empfänger, wie beispielsweise ein Mobilfunkgerät oder ein DECT Telefon, der zuvor als Empfänger konfiguriert wurde, zur Anzeige gebracht werden können. Der Anwender hat somit die Möglichkeiten die relevanten Prozessinformationsdaten auch dann zu erhalten, wenn er sich nicht in der Nähe der Anlage befindet.

Die Kriterien für die Selektionen können auf einfachste Art und Weise mit Hilfe von Eingabemitteln, die als Komponente eines sogenannten Software-Agenten ausgebildet ist, festgelegt werden. In dieser Komponente können, insbesondere vom Anwender, auf einfachste Art und Weise entsprechende Regeln definiert oder entsprechende Filterfunktionen ausgewählt werden, mit denen die Kriterien für die Selektion der zu akquirierenden Prozessinformationsdaten festgelegt werden.

Das erfindungsgemäße Verfahren wird insbesondere durch ein Computerprogrammprodukt ausgeführt.

Im Folgenden wird die Erfindung anhand des in der Figur dargestellten Ausführungsbeispiels näher beschrieben und erläutert:

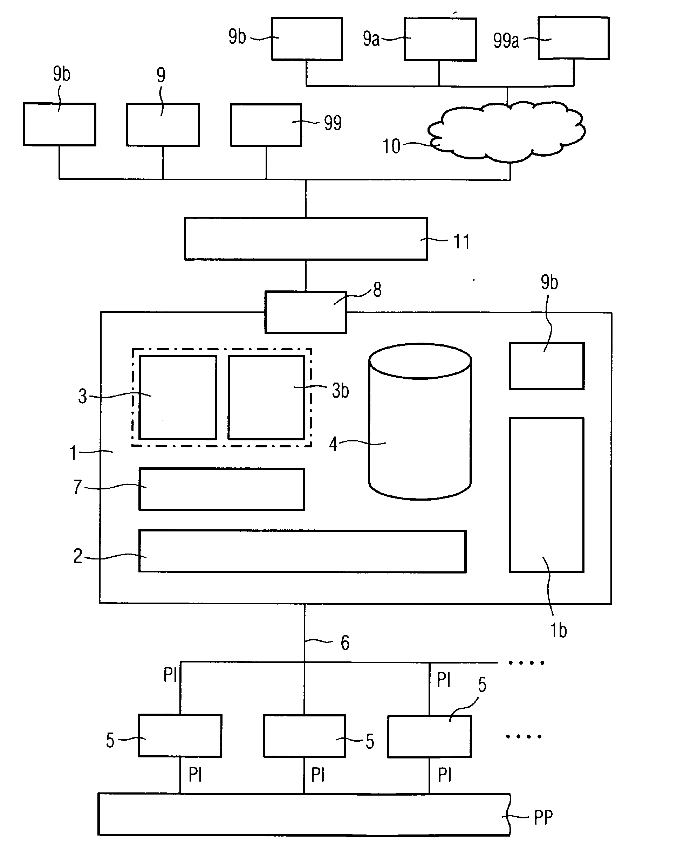

- FIG 1: zeigt ein Anlageninformationssystem, das mit verschiedenen Clients und den Geräten einer Anlage zum Ausführen eines Produktionsprozesses in Verbindung steht.

Das Anlageninformationssystem 1 akquiriert eine Vielzahl an Prozessinformationsdaten PI von einem Produktionsprozess PP der Anlage. Die Prozessinformationsdaten PI stammen von Automatisierungsgeräten, -systemen, Diagnosegeräten, -systemen und/oder weiteren Geräten, die in der Figur 1 alle das Bezugszeichen 5 aufweisen. Die Prozessinformationsdaten PI werden über eine Datenübertragungsvorrichtung 6 an das System 1 übertragen. Bei der Datenübertragungsvorrichtung 6 kann es sich beispielsweise um ein Bussystem handeln. Die Daten werden insbesondere von den Mitteln 2 akquiriert und zur Echtzeitbereitstellung zur Verwendung im System 1 bereitgestellt. Optional kann eine Vorrichtung 3 zur Aufbereitung oder Darstellung der akquirierten Prozessinformationsdaten PI im System 1 vorhanden sein. Des Weiteren kann eine Datenbank 4 zur Archivierung der akquirierten Prozessinformationsdaten PI vorgesehen sein. Bei der Datenbank 4 kann es sich dabei um einen SQL-Server handeln. Die Prozessinformationsdaten können durch weitere Mittel 7 zur Erzeugung von Alarmen oder Ereignissen genutzt werden. Über eine Schnittstelle 8, die als Kommunikationsmittel ausgebildet ist, ist die Kommunikation des Anlageninformationssystems 1 mit den verschiedensten Clients 9, 9a, 99, 99a möglich. Hierbei kann die Kommunikation über ein Internet 10 erfolgen. Ein Multiplexer 11 kann zur Verdeckung bei Redundanz und/oder mehreren Datenservern vorgesehen sein.

In dem in der Figur dargestellten Ausführungsbeispiel der Erfindung werden die Prozessdaten PI, die durch Automatisierungs- 5 bzw. Diagnosegeräte 5 an einem Produktionsprozess PP erhoben werden, an das Anlageninformationssystem 1 direkt weitergeleitet. Neben dem Einsatz von Bussystemen sind hierbei als Datenübertragungsvorrichtung 6 auch beliebige Kommunikationsnetze, wie beispielsweise die Übertragung über ein Internet, denkbar. Die Prozessinformationsdaten PI werden vom System 1 zum Bedienen und Beobachten genutzt, um einen aktuellen Anlagenzustand für einen Anwender darzustellen. Über das System 1 kann ein Anwender in der Regel auch Einfluss auf den entsprechenden Produktionsprozess PP nehmen, indem über die Datenübertragungsvorrichtung 6 die Steuerungen angesprochen werden können. Hierbei ist beispielsweise die Verstellung von Sollwerten denkbar. Desgleichen kann beispielsweise Einfluss auf zugeführte Mengen verschiedener Grundstoffe, die in dem Produktionsprozess verwendet werden, über das System 1 zum Bedienen und Beobachten genommen werden.

Um den Anwender auf spezielle Situationen aufmerksam zum machen, ist das Anlageninformationssystem 1 in der Lage, Alarme oder auch Ereignisse auf Basis der akquirierten Prozessdaten PP zu erstellen. Einfachste Analysen der Prozessdaten sind also durch die Mittel 7 zum Erstellen der Alarme und Ereignisse möglich.

Eine umfangreiche Analyse von Produktionsprozessen über einen längeren Zeitraum wird durch das System 1 ebenfalls ermöglicht, indem sämtliche Prozessinformationsdaten PI innerhalb des Anlageninformationssystems 1 auf einer Datenbank 4 archiviert werden. Alle dem Produktionsprozess entnommenen Messwerte werden auf der Datenbank 4 gespeichert. Über das System zum Bedienen und Beobachten 3 ist somit jederzeit ein schneller Zugriff auf die historischen Prozessinformationsdaten, die einen Produktionsprozess PP auch über einen längeren Zeitraum beschreiben, möglich. Eine Analyse, wie beispielsweise ein Vergleich verschiedener Chargen eines Produktionsprozesses, wird hierdurch durch das Anlageninformationssystem 1 ermöglicht.

Die von den Automatisierungs- bzw. Diagnosegeräten 5 akquirierten Prozessinformationsdaten PI können vom System 1 also sowohl zum Darstellen des aktuellen Anlagenzustands, als auch für die Archivierung zum Zweck einer späteren genauen Analyse, verwendet werden. Insbesondere müssen die Daten für beide Funktionalitäten auch nur einmal erhoben werden.

An das Anlageninformationssystem 1 können über eine geeignete Schnittstelle 8 als Kommunikationsmittel proprietäre Clients 9, beispielsweise spezielle Clients zum Bedienen und Beobachten, wie SCADA-Clients oder auch web-fähige Clients 9a, wie beispielsweise ein Web-Navigator für ein System zum Bedienen und Beobachten, angeschlossen werden. Auch unabhängige Clients 99, 99a, die selbst spezielle Funktionalität mitbringen, aber nicht direkt mit Funktionalität zum Bedienen und Beobachten ausgestattet sind, können an das System 1 über die Schnittstelle 8 angeschlossen werden und auf Prozessinformationsdaten PI zurückgreifen. So können dann auch die in der Datenbank 4 archivierten Prozessinformationsdaten beispielsweise auf speziellen Analyseclients, die spezifische Auswerte-, Analyse-, Statistik- und Grafikfunktionalität besitzen, dargestellt und weiterverarbeitet werden.

Ebenfalls können Standardprogramme, wie beispielsweise eine Office-Umgebung von Microsoft genutzt werden. Eine weltweite Information über den aktuellen Zustand der Anlage sowie über die Anlagenhistorie in Bezug auf den Produktionsprozess ist also zu jeder Zeit möglich. Der Zugriff kann hierbei zum einen über die proprietären B&B-Schnittstellen erfolgen, zum anderen aber auch durch ein Remoting der entsprechenden generischen Datenbank-Schnittstellen.

Insgesamt ermöglicht diese Anlageinformationssystem 1 einen beliebigen Zugriff zu jeder Zeit von jedem Ort über unterschiedlichste Clients 9,9a,99,99a auf die Prozessinformationsdaten PI einer Anlage, zum einen zum Bedienen und Beobachten (B&B- Funktionalität) der Anlage und zum anderen zur Informationsversorgung (Historian- Funktionalität). Erfindungsgemäß wird dieses Anlageninformationssystem noch insofern erweitert, als dass aus der Vielzahl von akquirierten Prozessinformationsdaten PI einige spezielle Prozessinformationsdaten selektiert werden, die für einen reibungslosen Prozessablauf relevant sind und damit dem Anwender gesondert angezeigt werden sollten (Agenten- Funktionalität).

Dazu wird das soeben beschriebene Anlageninformationssystem 1 mit Komponenten eines so genannten Software-Agenten erweitert, der ähnlich einem Scheduler Prinzip aufgebaut ist.

In dem in Figur 1 gezeigten Ausführungsbeispiel ist der Software-Agent in drei Komponenten unterteilt. Eine Komponente 9b realisiert dabei das Eingabemittel 9b, eine zweite Komponente 1b realisiert die Mittel zur Selektion spezieller Prozessinformationsdaten, sowie eine dritte Komponente 3b die die Mittel zur Aufbereitung dieser speziellen Prozessinformationsdaten realisiert. Die Eingabemittel 9b können dabei, wie aus Figur 1 ersichtlich, direkt in das Anlageinformationssystem 1 eingebunden oder als Client ausgebildet sein. Die Mittel zur Selektion 1b können Prozessinformationsdaten über die Mittel 2 direkt von den verschiedenen Geräten und Systemen 5 der Anlage akquirieren oder in der Datenbank 4 gespeicherte akquirierte Prozessinformationsdaten PI abfragen. Die Mittel zur Aufbereitung 3b dienen hauptsächlich zur grafischen Aufbereitung der speziellen Prozessinformationsdaten und können Teile der Mittel 3 oder auch unabhängig von diesen Mitteln 3 ausgebildet sein.

Erfindungsgemäß wird das Verfahren zur Selektion spezieller Prozessinformationsdaten aus der Vielzahl von akquirierten Prozessinformationsdaten, die dem Anwender zur Anzeige gebracht werden sollen, in den nachfolgend aufgeführten Schritten durchgeführt.

Damit spezielle Prozessinformationsdaten aus einer Vielzahl von zu akquirierenden Prozessinformationsdaten PI von Automatisierungsgeräten 5, -systemen 5, Diagnosegeräten 5, -systemen 5 und/oder weiteren Geräten 5 einer Anlage selektiert werden können, sind zuvor die entsprechende Kriterien für die Selektion festzulegen. Dies kann mittels der entsprechende Eingabemittel 9b, wie beispielsweise einem sogenannten Software-Agenten Konfigurator erfolgen. Im Software-Agenten Konfigurator 9b werden so beispielsweise zum Zeitpunkt des Engineerings die Kriterien für die zu akquirierenden speziellen Prozessinformationsdaten, deren Bezugsquellen, die logischen und arithmetischen Verknüpfungen, die Art und Weise der Triggerung für die Akquirierung und Weiterleitung, das heißt wann welche Prozessinformationsdaten akquiriert und über welche Kommunikationswege sie an welche Empfänger weitergeleitet werden sollen, festgelegt. Diese Einstellungen der Kriterien können im Software-Agenten Konfigurator aber auch im Runtime-Betrieb (Prozess-Betrieb) geändert oder neu eingegeben werden.

Diese Konfigurationsdaten, das heißt insbesondere die für die Selektion spezieller Prozessinformationsdaten festgelegten Kriterien werden dann einer weiteren Software-Agenten Komponente, dem sogenannten Software-Agenten Runtime übergeben, beziehungsweise dieser holt sich die Konfigurationsdaten beim Start des Runtime-Systems. Basierend auf diese Kriterien werden dann die entsprechenden Prozessinformationsdaten PI akquiriert und die speziellen Prozessinformationsdaten selektiert. Dazu kommuniziert diese Komponente mit den unterlagerten Datenquellen 5, oder auch der Datenbanken 4 und sammelt anhand der mit dem Software-Agenten Konfigurator erstellten Kriterien die entsprechenden Prozessinformationsdaten ein. Dabei kann der Software-Agenten Runtime entweder zuerst alle Prozessinformationsdaten akquirieren und erst danach eine Selektion der speziellen Prozessinformationsdaten vornehmen oder er kann schon von vornherein nur die speziellen Prozessinformationsdaten selektiert akquirieren. Der Ablauf der Akquirierung ist vielmehr unwichtig, solange am Ende im Software-Agenten Runtime die nach den zuvor konfigurierten Kriterien selektierten speziellen Prozessinformationsdaten zur Weitergabe an den Anwender bereitstehen.

Diese vom Software-Agenten Runtime akquirierten speziellen Prozessinformationsdaten werden dann einer weiteren Software-Agenten Komponente, der sogenannten Software-Agenten Visualisierung 3b übergeben. Diese Komponente hat die Aufgabe, die Daten grafisch aufzubereiten und an die entsprechend konfigurierten Empfänger weiterzuleiten. Dies können entweder die angebundenen Clients 9,9a,99,99a aber auch andere konfigurierte Empfänger, wie beispielsweise mobile Kommunikationsempfänger, oder auch die Software-Agenten Visualisierungskomponente 3b selbst sein. Diese Empfänger müssen natürlich so ausgebildet sein, dass die weitergeleiteten aufbereitenden Prozessinformationsdaten einem Anwender darstellbar sind.

Mit der Einbindung eines Software-Agenten im Bereich der Anlageninformationssysteme liegt die Idee zugrunde, dass insbesondere der Anwender mittels der im Software-Agenten-Konfigurator einstellbarer Auswerteregeln und Filtern, spezielle Prozessinformationsdaten sammeln, konzentrieren, aggregieren, verdichten kann, um diese aufbereiteten Daten dem Anwender auf entsprechend konfigurierten Empfängen zur Anzeige zu bringen.

Der Software-Agent ist dabei so aufgebaut, dass der Anwender sich aus dem System 1 ausloggen und der persönliche (anwenderspezifisch) oder der rollenbasierte (prozessspezifisch) Software-Agent weiterhin eigenständig die vorher konfigurierten Arbeitsschritte abarbeitet, das heißt also die speziellen Prozessinformationsdaten sammelt, entsprechend zusammenfasst und an einen für den Anwender konfigurierten Empfänger weiterleitet. Insbesondere kann der Software-Agent den Anwender über SMS, E-Mail, Fax-, oder auch einen Telefonanruf verständigen und den Anwender so, auch wenn er ausgeloggt ist, über den Status beziehungsweise das Ergebnis des Software-Agenten Auftrages zu informieren. Loggt sich der Anwender in das System 1 ein, so kann er sofort die von ihm gewünschten Informationen, die der Software-Agent, z.B. über Nacht, besorgt und ausgewertet hat erhalten. Die Mächtigkeit dieser Dienstleistung eines Software-Agenten wird dabei von dem Software-Agenten Konfigurator bestimmt, weil dieser den Funktionsumfang des Agentenauftrages festlegt. Der Software-Agent Runtime ist dann nichts weiteres als eine Software Komponente, die nach diesen vorgefertigten Regeln den Auftrag abarbeitet, die entsprechenden Prozessinformationen besorgt und dem Anwender zur Verfügung stellt.

So können zum Beispiel komplexe Berechnungen oder Analysen von speziellen Prozessinformationsdaten automatisch, vom Anwender unabhängig, vorgenommen werden oder auch zeitgetriggerte Agentenaufträge, z.B. bei Eintreten eines bestimmten Prozessereignisses gestartet werden, unabhängig davon, ob der Anwender vor dem System arbeitet oder nicht. Gerade in komplexeren Anlagen fällt eine Vielzahl von Daten und Jobs an, die solche in ein Anlageninformationssystem integrierte Software-Agenten übernehmen können.

## Patentansprüche

1. Anlageninformationssystem(1) mit
- Mitteln (2) zum Akquirieren einer Vielzahl von Prozessinformationsdaten (PI) von Automatisierungsgeräten (5),
- systemen (5), Diagnosegeräten (5), -systemen (5) und/oder weiteren Geräten (5) einer Anlage, und
- Mitteln (3,3b) zur Aufbereitung und/oder Darstellung der akquirierten Prozessinformationsdaten (PI),
**gekennzeichnet durch**
- Mitteln (1b) zur Selektion spezieller Prozessinformationsdaten aus der Vielzahl der zu akquirierenden Prozessinformationsdaten (PI) nach zuvor festgelegten Kriterien.

2. System nach Anspruch 1,
**dadurch gekennzeichnet, dass**
Eingabemittel (9b) vorgesehen sind, mit denen die Kriterien anwenderspezifisch und/oder prozessspezifisch festlegbar sind.

3. System nach Anspruch 1 oder 2,
**dadurch gekennzeichnet, dass**
die Akquirierung und Aufbereitung der selektierten speziellen Prozessinformationsdaten zyklisch wiederkehrend und/oder ereignisgesteuert erfolgt.

4. System nach einem der Ansprüche 1 bis 3,
**dadurch gekennzeichnet, dass**
Kommunikationsmittel (8) bereitstehen, die die akquirierten und die aufbereiteten selektierten speziellen Prozessinformationsdaten an zumindest einen zuvor konfigurierten Empfänger (9,99,9a,99a) weiterleiten.

5. System nach Anspruch 4,
**dadurch gekennzeichnet, dass**
die Weiterleitung zyklisch wiederkehrend und/oder ereignisgesteuert erfolgt.

6. System nach Anspruch 4 oder 5,
**dadurch gekennzeichnet, dass**
die Kommunikationsmittel (8) geeignet ausgebildet sind, um zumindest die aufbereiteten selektierten spezielle Prozessinformationsdaten im Format einer SMS, einer E-Mail und/oder eines Fax an einen der Empfänger (9,99,9a,99a) weiterzuleiten.

7. System nach einem der vorherigen Ansprüche 2 bis 6,
**dadurch gekennzeichnet, dass**
die Mittel zur Aufbereitung (3b), die Mittel zur Selektion (1b) und die Eingabemittel (9b) Komponenten eines Software-Agenten sind und die Kriterien für die Selektion vom Anwender in den Eingabemitteln durch Regeln und/oder Filterfunktionen festlegbar sind.

8. Verfahren für ein Anlageninformationssystem (1)
mit den Schritten:
- Selektieren von speziellen Prozessinformationsdaten aus einer Vielzahl von zu akquirierenden Prozessinformationsdaten (PI) von Automatisierungsgeräten (5), -systemen (5), Diagnosegeräten (5), -systemen (5) und/oder weiteren Geräten (5) einer Anlage nach zuvor festgelegten Kriterien,
- Akquirieren der Prozessinformationsdaten (PI), und
- Aufbereiten und/oder Darstellen zumindest der selektierten speziellen Prozessinformationsdaten.

9. Verfahren nach Anspruch 8,
**dadurch gekennzeichnet, dass**
die Kriterien anwenderspezifisch und/oder prozessspezifisch festgelegt werden.

10. Verfahren nach Anspruch 8 oder 9,
**dadurch gekennzeichnet, dass**
die Akquirierung und Aufbereitung der selektierten speziellen Prozessinformationsdaten zyklisch wiederkehrend und/oder ereignisgesteuert erfolgt.

11. Verfahren nach einem der Ansprüche 8 bis 10,
**dadurch gekennzeichnet, dass**
die akquirierten und die aufbereiteten selektierten speziellen Prozessinformationsdaten an zumindest einen zuvor konfigurierten Empfänger weitergeleitet werden.

12. Verfahren nach Anspruch 11,
**dadurch gekennzeichnet, dass**
die Weiterleitung zyklisch wiederkehrend und/oder ereignisgesteuert erfolgt.

13. Verfahren nach Anspruch 11 oder 12,
**dadurch gekennzeichnet, dass**
zumindest die aufbereiteten selektierten speziellen Prozessinformationsdaten im Format einer SMS, einer Email und/oder eines Fax weitergeleitet werden.

14. Verfahren nach einem der vorherigen Ansprüche 8 bis 13,
**dadurch gekennzeichnet, dass**
die Kriterien für die Selektion durch Regeln und/oder Filterfunktionen festgelegt werden.

15. Computerprogrammprodukt zum Ausführen des Verfahrens nach einem der Ansprüche 8 bis 14.
